# EUROPEAN PATENT APPLICATION

(11) **EP 1 655 154 A2**
(43) Date of publication of application: **10.05.2006**
(21) Application number: 05024193.4
(22) Date of filing: 07.11.2005
(51) Int. Cl.: B60D 1/46

(54) **Slidable carriage for a tow hitch for vehicles**

(30) Priority: 09.11.2004 IT BO20040694
(71) Applicant: CBM S.p.A., 41100 Modena (IT)
(72) Inventor: Cornia, Enrico Maria, 41100 Modena (IT)
(74) Representative: Provvisionato, Paolo

(57) **Abstract**

A slidable carriage (10) for a tow hitch (11) for vehicles comprises a main member (12), means for locking the position of the carriage (10) which are mounted on the main member (12), control means for controlling the selective locking and unlocking of the locking means, actuation means which are connected to the locking means and which are coupled to the control means in order to selectively actuate the locking means as a result of control of the control means. Handling means are provided in order to support the slidable carriage (10) in the unlocked position, the control means comprising control lever (31) means which are coupled to the handling means in a movable manner.

## Description

The present invention relates to a slidable carriage for a tow hitch for vehicles, in particular agricultural tractors.

In agricultural tractors, tow hitches can be mounted on slidable carriages, also referred to as "slider" type carriages, which can slide selectively on lateral guides in such a manner that the position of the tow hitch in terms of height can be readily adjusted if necessary by an operator in accordance with the height of the trailer, and in particular the vertical position in which the towing eye of the trailer which is intended to be engaged in the mouth of the tow hitch is located. There are known a number of slidable carriages of the above-indicated type, of which an example is described and illustrated in the patent document EP 0 667 252 by the same applicant.

Slidable carriages of known type generally comprise a control lever, whose operation selectively brings about, by means of mechanical systems and drives of various types, movement of a pair of transverse retractable pins which engage with or disengage from holes which are formed at or near the lateral guides. The control lever terminates in a handle which is held by the operator both in order to move the control lever into the position in which the pins are disengaged from the above-mentioned holes, and to support the slidable carriage and the hitch during the operation for adjusting the position in terms of height. At the end of the adjustment operation, the operator moves the control lever back to the position for engaging the pins in the holes, carrying out a movement counter to that for disengagement. The movements of the lever from the engagement position to the disengagement position, and vice versa, normally involve extensive movements of the arm by the operator and require a degree of skill, together with the physical effort necessary to support the slidable carriage and the tow hitch when the pins are disengaged from the adjustment holes. The operation for adjusting the position of the tow hitch in terms of height can therefore involve, for the operator, an initial period of learning or adapting in order to best carry out the series of movements necessary to actuate the control lever and hold the slidable carriage suspended whilst the pins are disengaged.

An object of the present invention is to provide an alternative system for operating the slidable carriage with respect to the systems of the prior art, in such a manner that the operation for adjusting the position in terms of height of the tow hitch, in particular for disengaging and re-engaging the pins from/with the respective holes, is more direct, convenient and practical for an operator, even an inexpert operator. Another object of the present invention is to provide a slidable carriage for a tow hitch which is simple, compact, reliable to use and economic to produce.

In order to achieve the above-indicated objects, the present invention relates to a slidable carriage for a tow hitch having the features indicated in the appended claims.

A particular feature of the slidable carriage constructed in accordance with the invention is the fact that the operator is not obliged to carry out extensive movements of the arm or the body because the operation for disengaging and engaging the pins from/with the respective holes is effected by simply tightening or clenching the hand which is holding the handle for supporting the slidable carriage.

According to an additional feature, the slidable carriage has a safety device which prevents inadvertent disengagement of the pins from the holes. In particular, that safety device is positioned so as to be able to be readily actuated by the operator with the thumb of the same hand which grips the handle for supporting the slidable carriage.

Further features and advantages will become apparent from the following detailed description of a preferred embodiment given with reference to the appended drawings which are provided purely by way of non-limiting example and in which:
- Figure 1 is an elevation of a slidable carriage for a tow hitch, viewed from the side opposite the mouth of the tow hitch, and shown with its cover removed in order to illustrate more clearly the internal mechanisms,
- Figure 2 is a cross-section taken along line II-II of Figure 1,
- Figure 3 is a cross-section taken along line III-III of Figure 1 and
- Figure 4 is an elevation, drawn to an enlarged scale, of a detail of the safety device for operating the slidable carriage of Figure 1.

With reference now to the Figures, a slidable carriage 10 for a tow hitch 11 comprises a main member 12, in which a seat 13 for accommodating the shank 14 of the tow hitch is formed. The connection between the tow hitch 11 and the slidable carriage 10 is of the type generally known in the art and therefore will not be further discussed. There are formed, on the sides of the main member 12, two guide portions 15 which are intended to slidingly engage in lateral guides (not illustrated in the Figures) which are fixed to the structure of the vehicle, in particular the agricultural tractor. Two pins 16, which are intended to engage selectively in corresponding holes (not illustrated) which are formed at or near the lateral guides, further protrude from the sides of the main member 12. The slide system of the slidable carriage with respect to the vehicle, on which the lateral guides are mounted, and the arrangement of the holes, which can be selectively engaged with the pins 16, are widely known in the art.

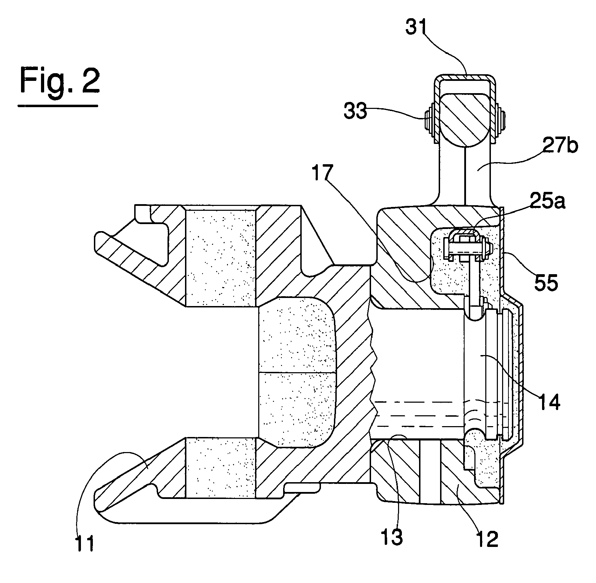

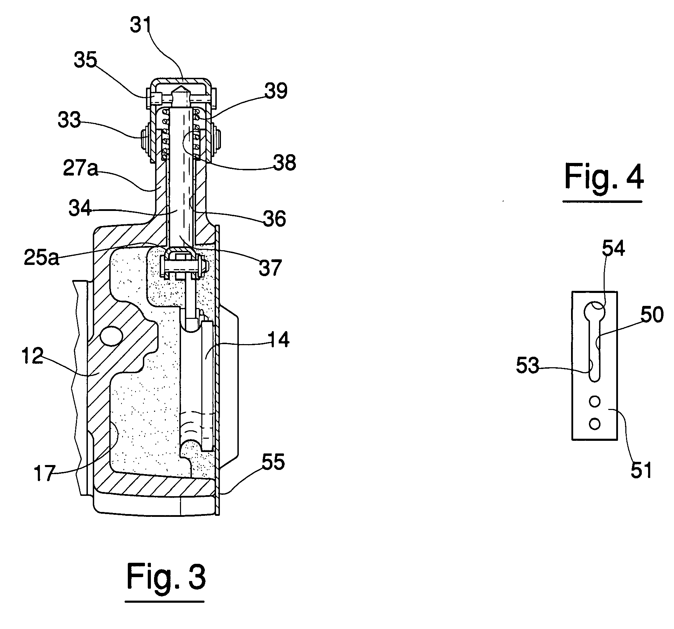

The main member 12 of the slidable carriage 10 comprises an internal cavity 17 which surrounds the seat 13 and which is closed by a panel or cover 55 (visible in Figures 2 and 3). Each pin 16 is mounted so as to slide along the axis thereof and extends through a respective lateral wall of the main member 12 in such a manner that the end 18 thereof, which projects inside the cavity 17, is articulated to the end of a first arm 19 of an L-shaped lever 20. Each L-shaped lever 20 is mounted so as to pivot in the internal cavity 17 and has a second arm 21, to the end of which an end 22 of a respective bracket 23 is articulated. The ends 24 of the brackets 23 are in turn articulated to the ends of two rods 25a, 25b which are connected to each other at the ends thereof most remote from the brackets 23, respectively.

A support handle 26, which is preferably, though not in a limiting manner, produced integrally with the main member 12, extends above the main member 12 of the slidable carriage 10. The support handle 26 comprises two uprights 27a, 27b which project upwards from the upper wall 28 of the main member 12 and are joined to each other by a cross-member 29 which is substantially parallel with the upper wall 28 of the main member 12, in such a manner as to generally form a space 30, in which the operator can readily introduce the fingers of one hand.

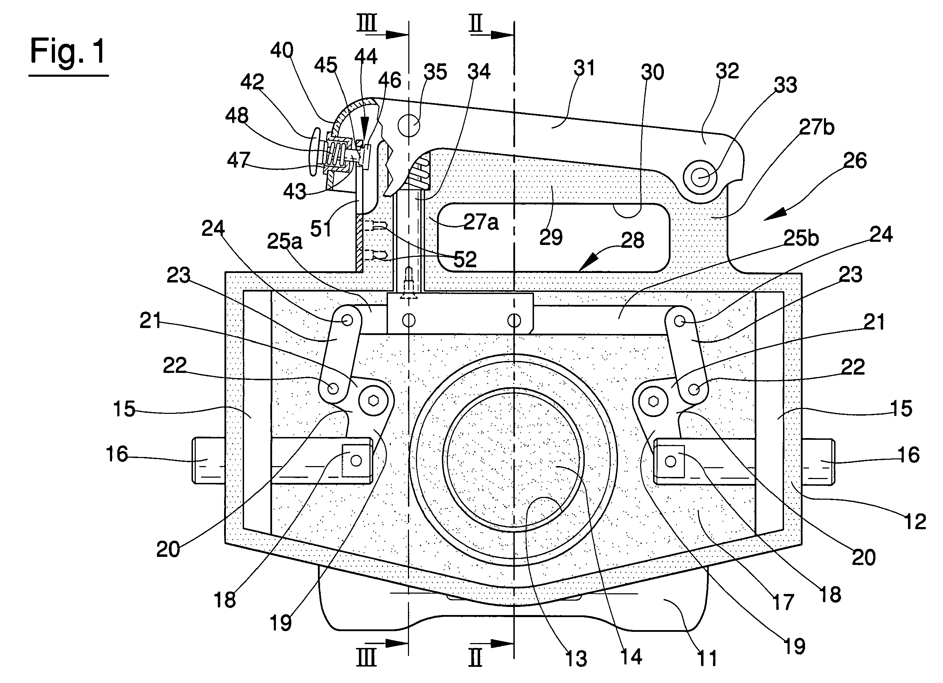

A control lever 31, preferably in the form of an inverted U in cross-section, extends above and partially encloses the cross-member 29 and is mounted so as to pivot relative thereto in the region of an end 32 thereof by way of a transverse articulation pin 33, which is arranged substantially in the connection region between the upright 27b, to the right in Figure 1, and the cross-member 29. A control rod 34 is mounted so as to pivot on the control lever 31, by way of a transverse articulation pin 35, into a position in which it substantially extends above the upright 27a (to the left in Figure 1) of the handle 26. The control rod 34 is received, for the most part, inside a guide hole 36 which is provided along the upright 27a, in such a manner that a head 37 of the control rod 34 projects inside the internal cavity 17 of the main member 12 in order to be fixed to the rod 25a, as is clearly visible with reference to Figure 3. The guide hole 36 has an upper portion 38 having a larger diameter in order to accommodate a spring 39 which is coaxial with the control rod 34 and presses against the transverse articulation pin 35.

A safety device, generally designated 41, is mounted on the end 40 of the control lever 31 and comprises a button 42 which is fixed to the end of a post 43 which has, at the other end, an enlarged head 44 which preferably comprises two cylindrical portions 45, 46 having a progressively increasing diameter. The post 43 extends through the bottom of a cup-like member 47 which is mounted on the end 40 of the control lever 31, in which a return spring 48 which presses against the button 42 is received in a manner coaxial with the post 43. The post 43 is inserted in a slot 50 which is formed in a plate 51 (Figure 4) which is fixed by means of screws 52 to the side of the upright 27a. The slot 50 is formed so as to have a portion 53 having a width greater than the diameter of the shank of the post 43, but less than the diameter of the first cylindrical portion 45 of the enlarged head 44. At the upper end thereof, the slot 50 has a widened portion 54, whose maximum dimension is greater than the diameter of the first cylindrical portion 45 of the enlarged head 44, but less than the diameter of the second portion 46.

The configuration illustrated in Figure 1 relates to the slidable carriage 10 in the normally locked position, in which the pins 16 protrude from the sides of the main member 12 in order to engage in corresponding holes (not illustrated) which are formed at or near the guides which are mounted on the vehicle. In that configuration, the spring 39 presses the control lever 31 upwards, and with it the control rod 34, whose head 37 is fixed to the rod 25a.

When an operator wishes to carry out adjustment in terms of height of the position of the tow hitch, he inserts his hand into the space 30 of the handle 26, preferably in such a manner that his thumb is directed towards the button 42 of the safety device 41. Pressure on the button 42, counter to the action of the return spring 48, causes the first cylindrical portion 45 of the enlarged head 44 to leave the widened portion 54 of the slot 50, in such a manner that the shank of the post 43, having a smaller diameter, can slide in the portion 53 of the slot 50 when the operator, with his hand which is substantially balled into a fist, at the same time squeezes the control lever 31, acting counter to the action of the spring 39 and pressing the control rod 34 downwards. That movement of the control rod 34 brings about a corresponding movement of the rods 25a, 25b and a consequent rotation of the L-shaped levers 20, which draw the pins 16 towards the inner side of the main member 12, thereby releasing the slidable carriage in such a manner that it can slide on the guides thereof, supported by the hand of the operator tightly gripping the handle 26 and the control lever 31.

When the operator has reached the desired position in terms of height, it is simply necessary for the grip of his hand on the handle 26 to be slackened in order to bring about the return of the control lever 31 into the normally locked position of Figure 1. If the pins 16 are not exactly in alignment with the adjustment holes, the operator can simply continue to move the slidable carriage vertically, supporting it with his hand in the handle 26, but without squeezing the control lever 31, until the posts are introduced, under the action of the spring 39, into the next adjustment holes.

Naturally, the principle of the invention remaining the same, the forms of embodiment and details of construction may be varied widely with respect to those described and illustrated, without thereby departing from the scope of the present invention.

## Claims

1. A slidable carriage for a tow hitch for vehicles, comprising a main member, means for locking the position of the carriage which are mounted on the main member, control means for controlling the selective locking and unlocking of the locking means, actuating means which are connected to the locking means and which are coupled to the control means in order to selectively actuate the locking means as a result of the control of the control means, **characterized in that** it further comprises handling means in order to support the slidable carriage in the unlocked position, the control means comprising control lever means which are coupled in a movable manner to the handling means.

2. A slidable carriage according to claim 1, **characterized in that** the control lever means are coupled to the handling means in a grippable manner.

3. A slidable carriage according to claim 1 or 2, **characterized in that** the control lever means are mounted on the handling means in a pivotable manner.

4. A slidable carriage according to any one of the preceding claims, **characterized in that** the handling means comprise at least two uprights which protrude from the main member and which are connected by at least one cross-member, generally defining with at least a portion of the main member a space for the introduction of the fingers of the hand of an operator.

5. A slidable carriage according to claim 4, **characterized in that** the control lever means comprise a control lever which is articulated at one side to the handling means in the region of one of the at least two uprights and which is connected to a control rod at the other side, the control rod being received so as to slide in a hole which is formed in the other of the at least two uprights.

6. A slidable carriage according to claim 5, **characterized in that** the control rod is fixed to the actuation means which are accommodated at the inner side of a cavity of the main member.

7. A slidable carriage according to any one of the preceding claims, **characterized in that** the control means comprise resilient means which press against the control lever means in order to hold the slidable carriage in the locked position.

8. A slidable carriage according to any one of the preceding claims, **characterized in that** it comprises safety means in order to prevent inadvertent unlocking of the locking means.

9. A slidable carriage according to claim 8, **characterized in that** the safety means comprise push-button means which are arranged on the control lever means.

10. A slidable carriage according to claim 9, **characterized in that** the push-button means are arranged on the control lever means at a side opposite a connection which can pivot between the control lever means and the handling means.
